# EUROPEAN PATENT APPLICATION

(11) **EP 3 633 953 A1**
(43) Date of publication of application: **08.04.2020**
(21) Application number: 19204657.1
(22) Date of filing: 21.12.2007
(51) Int. Cl.: H04L 29/06, H04N 7/00

(54) **MEDIA DEMAND AND PLAYBACK SYSTEM**

(30) Priority: 22.12.2006 GB 0625810
(62) Divisional of application: 07848666.9
(71) Applicant: Sky CP Limited, Isleworth, Middlesex TW7 5QD (GB)
(72) Inventor: KELLY, David, Isleworth, Middlesex TW7 5QD (GB); JAMES, Nicholas, Isleworth, Middlesex TW7 5QD (GB)
(74) Representative: Lam, Alvin

(57) **Abstract**

A media system stores a plurality of media content items for transmission to a media receiver in response to requests for the items. The media system receives a request for a particular item and generates a playlist including the requested item. The media system adds at least one further media content item to the playlist and transmits the items to the media receiver for playback. A media receiver is also provided for playing back received items. The media receiver receives a playlist including the requested item and at least one preview secondary media content item provided at a playback position in the playlist before the requested item. The media receiver plays back the received items but user selection of a playback start position is disabled until the preview secondary media content item has been viewed in its entirety.

## Description

### Field of the Invention

This invention relates to an apparatus, method and system for receiving and playback of media content, particularly in a video on demand (VOD) media system.

### Background of the Invention

In a conventional Video on Demand (VOD) system, a library of media content is stored at a media server. Typically in Pull VOD systems, users select media content from the library and the selected media content is streamed or downloaded to the user's media receiver. In Push VOD systems, media content may be transmitted to the user's media receiver prior to a request. In both systems, it is known for VOD media content providers to include embedded secondary media content within the transmitted media content, such as advertising clips, promotional video clips, trailers, sponsorship bumper clips, etc. The problem with providing the secondary media content in an embedded form is that the user may be able to bypass portions of the transmitted stream or downloaded media content to skip the secondary media. Therefore, an improved system and method controlling playback of these secondary media content is necessary.

### Statement of the Invention

In one aspect of the present invention, a media system is provided for storing a plurality of media content items for transmission to a media receiver. The media system receives a request for a particular media content item and generates a playlist including the requested media content item. The media system also adds at least one further media content item to the playlist at a playback position before or after the requested media content item.

In another aspect of the present invention, a media receiver is provided for playing back received primary and secondary media content items received from a media server in response to a request for the media content. The media receiver transmits a request to the media server for a primary media content item stored on the media server and receives a playlist including the requested primary media content and at least one secondary media content items from a media receiver, wherein at least one of the secondary media content items is a preview secondary media content item provided at a playback position in the playlist before the requested primary media content item. The media receiver then plays back the received primary and secondary media content items in the playlist starting with the preview secondary media content items, but user selection of a playback start position is disabled until playback of the primary media content is initiated. As will be understood, user selection of a playback start position is only enabled when all of the preview secondary media content items have been viewed in their entirety.

In yet another aspect of the invention, there is provided a method of operating a media server and a media receiver, as described above. In another aspect, there is provided a computer program arranged to carry out the method when executed on the media server.

In still another aspect, there is provided a data structure for storing a list of primary and secondary media content items, at least one flag for indicating playback options available to a viewer during playback of the media content items, and at least one field for storing time position data. In another aspect, there is provided a signal carrying the above data structure.

### Brief Description of the Drawings

Specific embodiments of the present invention will now be described with reference to the accompanying drawings, in which:
Figure 1 is a block diagram of a media system according to an embodiment of the invention;
Figure 2 is a schematic illustration of the components of a media content playlist;
Figure 3 is a schematic illustration of an example of a media content playlist template being processed into a viewable playlist;
Figure 4, which comprises Figures 4a and 4b, is a flow diagram of a playback operation in an embodiment of the invention;
Figure 5 is an illustration of examples of differing playback sessions;
Figure 6 is an illustration of a user interface that is displayed to the user; and
Figure 7 is a diagram of the options available the user in the user interface of Figure 6.

### Detailed Description of Embodiments of the Invention

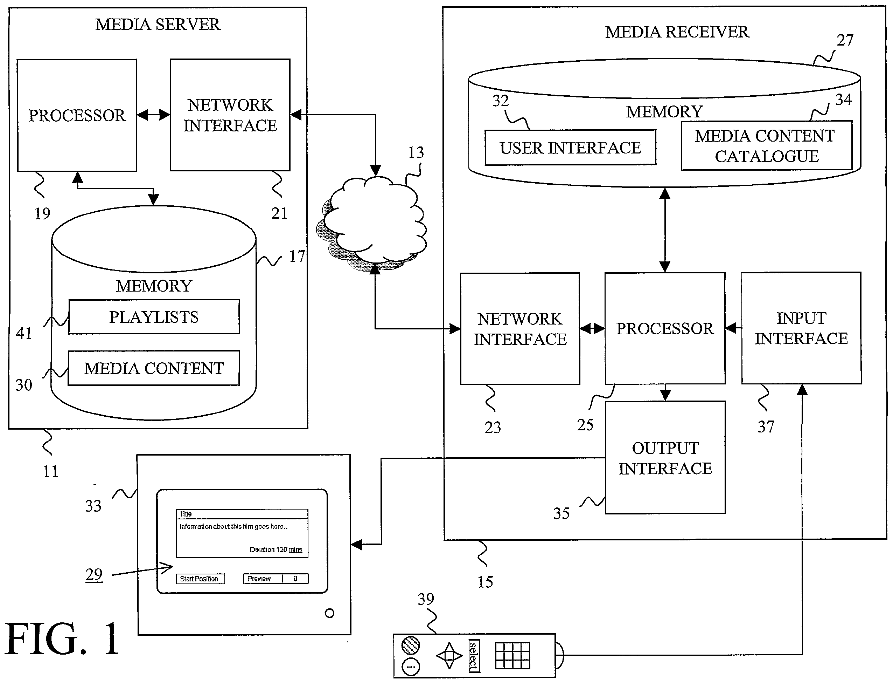

Figure 1 is a block diagram showing functional features of the media system according to one embodiment of the invention. In this embodiment, a media server 11 provides media content over a network 13, such as a satellite network or the Internet, to a plurality of media receivers 15, only one of which is shown in Figure 1. The media server 11 includes a memory 17 such as a hard disk which stores media content items 30, such as audio and/or video programmes and clips, and playlists 41 which are created in response to user requests for playback of stored media content items 30, as will be discussed below. Each playlist 41 includes a list of media content items 30 to be transmitted to a requesting media receiver 15, as well as flags for indicating options available to the user during playback of a playlist 41 and fields for storing time position data. The fields include, for example, a bookmark indicating a user defined playback position within the playlist 41 and a "last viewed" position indicating the playback position within the playlist where playback was stopped by the user. The flags and fields can be modified by the media receiver 15 during playback of the media content in the playlist, as will be described below. The media server 11 also includes a processor 19 which outputs the content items to a media receiver 15 via a network interface 21, such as a network interface card (NIC).

The media receiver 15 receives the content items from the media server 11 via the network 13 and a network interface 23, such as a NIC. The media receiver 15 includes a processor 25 which stores the received content items in a memory 27. The memory 27 may include a RAM for storing the received playlist 41 and a buffered portion of the received media content if user requests streaming playback of the media content. Alternatively, the memory 27 may include a hard disk for storing the received playlist and media content for later playback. The memory 27 also stores a media content catalogue 34 which is an application used by the media receiver 15 to access the media content 30 available from the media server 11. The media content catalogue 34 maintains a listing of the available media content 30 on the media server 11 and the media receiver 15 receives updated listings from the media server 11, for example, whenever new media content 30 is made available on the media server 11.

A user interface 32 is also stored in the memory which lists content items 30 available from the media server 11 and allows user to select listed content items for playback to an audio visual display 33 via a suitable output interface 35. The media receiver 15 also includes a suitable input interface 37, such as an IR receiver for receiving input commands by a user via a remote controller 39.

### Playback Operation

In the following description, the media content items 30 which are stored in the media server 11 are referred to as assets and are files in the media server 11 which provide an instance of a movie, and advertisement clip, a TV show, or any other type of content that will be played back to the viewer. A sequence of one or more of these assets makes up a playlist 41.

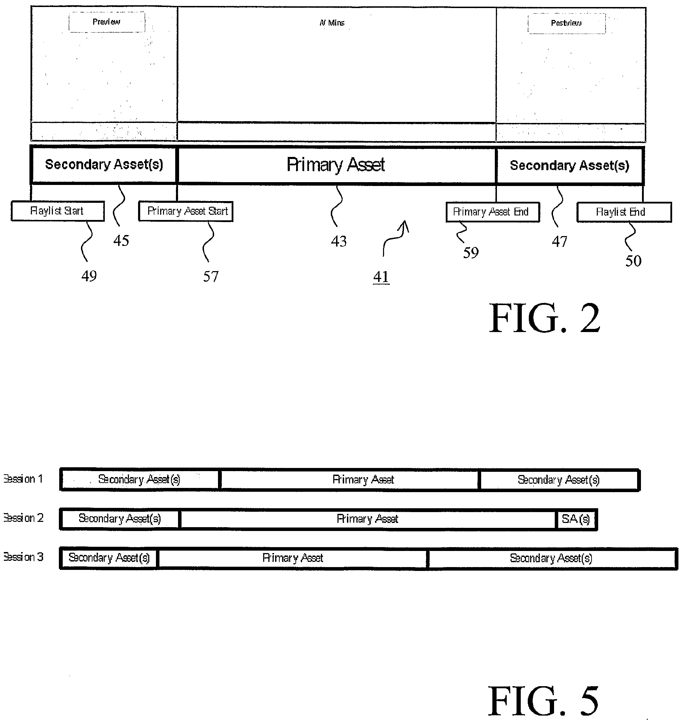

Figure 2 is a schematic illustration of a playlist and shows a primary asset 43, one or more preview secondary assets 45 provided at a playback position before the primary asset 43 and one or more postview secondary assets 47 provided at a playback position after the primary asset 43. A primary asset is the key content that the viewer expects to view once they have selected a particular media content item via the user interface 32. Primary assets associated with a media content item will remain unchanged. For example, if an advert is included within the primary asset, it will remain there until the asset is re-ingested. Typically, some of the primary assets meta data will be used in the description of the media content item, such as the title or the synopsis. Secondary assets refer to all of the other material except for primary assets that make up a playlist 41. These are typically commercial advertisement clips (advert), promotional feature video clips (promo), certificates specialised for a primary asset rating or brand (Cert), an ID or bumper that has a specific relationship with a sponsor (Sponsorship PresEvent), an ID or bumper not associated with a specific sponsor (PresEvent), trailers, etc. Some secondary assets may be associated with a primary asset in a fixed manner so that a particular secondary asset will always be included in a playlist containing the associated primary asset. Other secondary assets may be dynamically associated with a particular media content item and therefore can change associations with primary assets. A set of targeting rules may be provided to define the fixed and dynamic associations, as will be discussed below.

In the present embodiment, the media content catalogue 34 stored in the media receiver 15 includes a plurality of entries, each associated with a respective primary asset stored in the media server 11. A particular media content entry for a primary asset is selectable by a viewer via the user interface 32, for example, through a purchase or selection process to select the displayed entry for a desired media content item. The selection of a media content entry opens a playback session, whereby a playlist of assets is created and transmitted to the viewer's media receiver 15 by the media server 11.

In this embodiment, playlist templates are used to create a publishable playlist of assets that is transmitted to the viewer's media receiver 15. Selection of which playlist template to apply to a particular primary asset can be based on factors such as content provider, brand, programme name, rating, recipient information such as demographic and/or genre. Once applied to the primary asset, a playlist is generated that is based on the template. The playlist can subsequently be updated without changing the template it is based on.

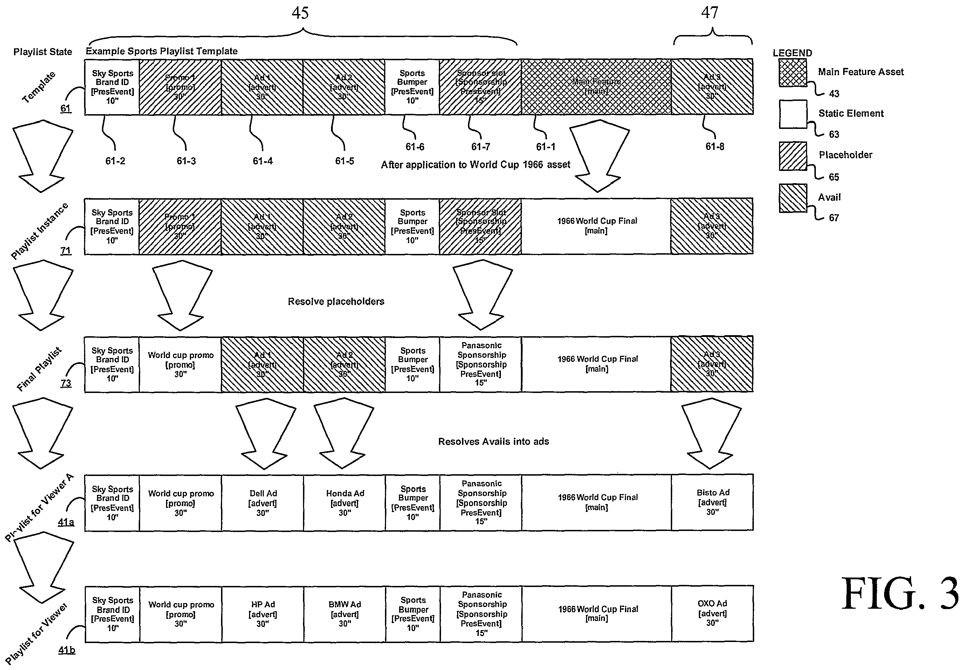

Figure 3 is a schematic illustration of an example media content playlist template being processed in accordance with the present invention into a viewable playlist. As shown in Figure 3, the example playlist template 61, contains three types of elements in addition to the primary asset 43 (main feature): "static" elements 63, "placeholder" elements 65 and "avail" elements 67. Static elements 63 are pre-determined in the template 61 and will be applied to every playlist based on the template 61. Static elements 63 include, for example, IDs and bumpers. Additionally, as secondary assets are applied, assigned and resolved to respective template elements, the elements are then considered to be static. Placeholder elements 65 are gaps in the template 61 which must be filled with a secondary asset to fill the hole in the playlist 41 before the playlist can be published and transmitted to the viewer's media receiver 15. Placeholder elements 65 include, for example, promos and sponsorships. Avail elements 67 are also gaps in the template but are not required to be filled in prior to publication. Instead, the gaps in the template 61 representing an avail element 67 are dynamically resolved and populated when a viewer begins to stream or download the published playlist 41. As those skilled in the art will appreciate, a playlist 41 based on a template 61 containing no placeholder elements 65 is immediately publishable. Playlists with one or more placeholder element 65 cannot be published until the respective gaps are filled with appropriate secondary assets.

As shown in Figure 3, processing of a playlist template 61 into a viewable playlist 41 begins with application of the user requested primary asset 43 to the main feature element in the template 61. In the example shown in Figure 3, the requested main feature is the "1966 World Cup Final" and the selected template is a sports playlist template 61. This results in a playlist instance 71 of the template 61, with the "1966 World Cup Final" inserted as the main feature asset 61-1. As shown in Figure 3, the preview secondary assets 45 specified by this sports playlist template 61 include the following elements in sequence: a Sky Sports Brand ID static element 61-2, a promo placeholder 61-3, two advert avail elements 61-4 and 61-5, a sports bumper static element 61-6 and a sponsor slot placeholder 61-7. The postview secondary assets 47, in this example, includes a single advert avail element 61-8.

The next step is to resolve the placeholder elements 65 in the playlist instance 71. In the example shown in Figure 3, a final publishable playlist 73 is generated by applying a "World cup promo" to the promo placeholder element 61-3 and a "Panasonic Sponsorship" to the sponsorship placeholder element 61-7. As discussed above, the avail elements 67 in the final publishable playlist 73 can be resolved when the playlist 73 is to be transmitted to the viewer's media receiver 15 or later at the receiver. As shown in Figure 3, advert avail elements 61-4, 61-5 and 61-8 are filled in with different adverts for different users resulting in two different playlists 41a and 41b which are transmitted to respective media receivers 15.

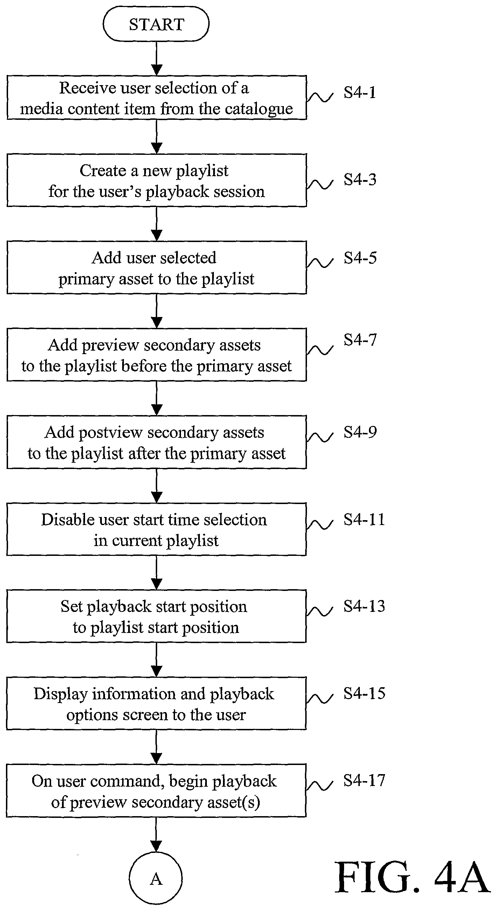

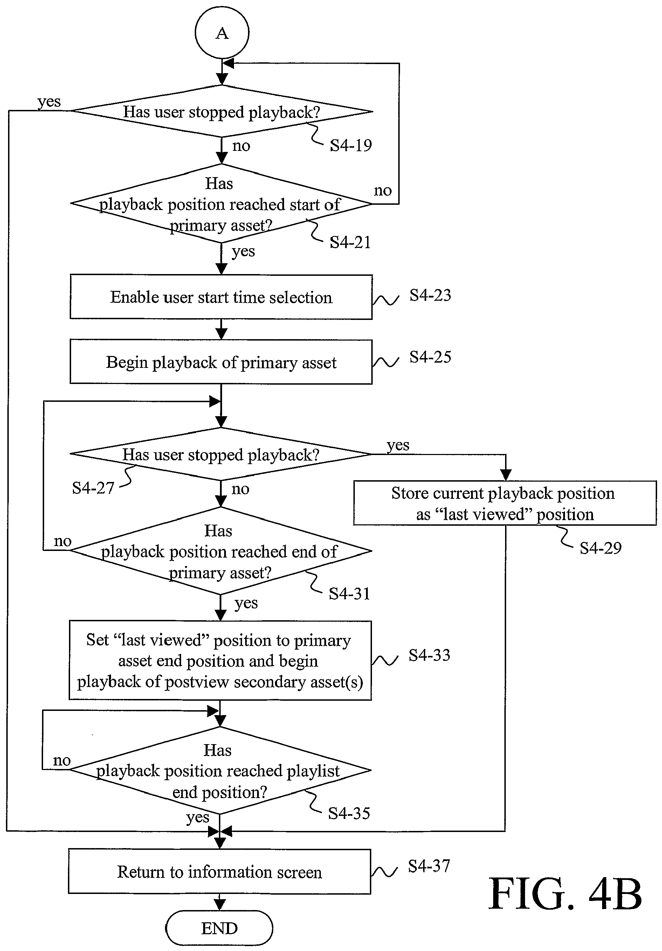

Figure 4, which comprises Figures 4a and 4b, is a flow diagram illustrating the operation of the media system to respond to a user demand and to play back the user selected media content item.

Referring now to Figure 4A, at step S4-1, the selection and playback operation begins with the media receiver 15 receiving a user selection of an entry in the media content catalogue 34 associated with a primary asset. As discussed above, this selection will typically be made by the user via a user interface 32 displayed on the audio-visual display 33 and the input receiver 37 receiving a user input from the remote control 39. Having received the user selection, the selected entry is transmitted by the media receiver 15 to the media server 11. In response to receiving the selected entry, the processor 19 of the media server 11 creates a new empty playlist 41 at step S4-3 based on a selected playlist template as discussed above. At step 3-5, the processor 25 adds the primary asset 43 associated with the user selected media content entry to the empty playlist 41. At step S4-7, the processor 25 then adds any preview secondary assets 45 to the playlist at a playback position before the primary asset 43. At step S4-9, the processor 25 adds any postview secondary assets 47 to the playlist at a playback position after the primary asset 43.

The present invention provides for a dynamic selection of secondary assets to be associated with a selected primary asset 43 whenever a new playlist is generated. With each new playback session, a different playlist template may be selected for the selected primary asset 43, resulting in different numbers and combinations of preview and postview secondary assets being added to the playlist. Each resulting playlist may therefore have different play back times, as shown in Figure 5. The way in which secondary assets are selected for inclusion in a playlist as well as the number of secondary assets to be added are defined by a given set of targeting rules. The targeting rules can be based on metadata of the selected primary asset 43 and can be time or date sensitive. The targeting rules define the fixed and dynamic associations between secondary assets and a primary asset and are therefore used to drive the dynamic insertion of secondary assets to populate the available slots. In this way, it is possible to dynamically change the secondary assets associated with a selected primary asset to take into account targeting rules to control aspects such as:
- controlling the exact point a secondary asset is inserted, for example, to ensure that an advertisement clip is the last advertisement shown before a primary asset and the first shown immediately after the primary asset;
- linking the advert inserted immediately before and immediately after a primary asset so that the advertisement is by the same advertiser;
- limiting secondary asset use by time of day to ensure that post-watershed advertisements are only shown at the right times;
- targeting secondary assets based on subscriber data, such as subscriber location, age, sex, socio-demographic group or region, etc.;
- inheriting the target audience from the primary asset;
- avoiding clashes between the primary asset and the secondary assets, for example clashes in subject-matter (avoiding car adverts within a movie about car crashes or clashes between artists in adverts and primary media content);
- monitoring the number of times a secondary asset is selected to fill a placeholder or avail element and therefore control the number of times that secondary asset is selected again.

This system also allows for no advertising to be associated with an item in the break preceding or following a media content item independently. Alternatively, a random selection from a pre-determined selection of advertising material can be associated with a particular media content item, for example, depending on the genre or sub-genre of that media content item.

Referring back to Figure 4, at step S4-11, the processor 25 disables user start time selection in the current playlist because this will be the first time that the user is playing any preview secondary assets in the playlist 41. This is achieved by setting the respective flags in the playlist 41 to disabled. In this embodiment, the media server 11 maintains a list of all subscribers/viewers and associated request primary assets, together with an indication of whether the respective subscriber/viewer has viewed all of the preview secondary media content items in their entirety. In this example, the preview secondary assets for the particular selected primary asset have not been viewed and the media server 11 would therefore store an indication that the particular user had requested the particular primary asset but had not watched all of the preview secondary assets in their entirety.

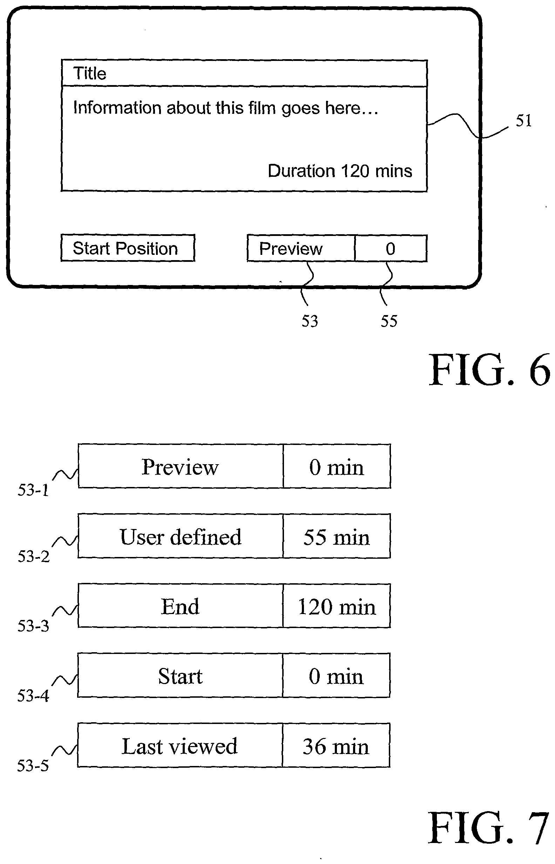

At step S4-13, the processor 25 sets the playback start position to the playlist start position 49 and at step S4-15, the processor 25 displays a play back screen of the user interface 32 to the user via the output interface 35. The displayed screen includes information about the selected media content item which could be the associated meta data of the primary asset 43. Figure 6 shows an example of the screen that is displayed. In the example screen, the information 51 includes the title, the synopsis and the time duration of the primary asset 43. The example screen illustrated in Figure 6 also shows a playback options field 53 for selecting a playback start position within the playlist 41. As shown in Figure 6, as this is the first time that the user will be playing the assets in the playlist 41, the start position is set as "preview" with the associated time field 55 set to "0 min". User selection of a start time is disabled until the user is viewing the primary asset 43. At step S4-17, in response to user input instructing the media receiver to begin playback, the processor 25 begins playback of any preview secondary assets 45 in the playlist 41. In the present embodiment, during this initial playback of the preview secondary assets 45, the user is unable to skip through bookmarks or secondary assets 45 during the playback. This will be enabled once the user has viewed the previous secondary assets 45 in their entirety.

Referring now to Figure 4B, once playback of the preview secondary assets 45 has begun, the processor 25 will monitor for user input indicating that the user wishes to stop playback of the playlist. If at step S4-19 the processor 25 receives input via the input interface 37 indicating that the user has stopped playback during initial playback of the secondary assets 45, playback operation will return the viewer to the information screen at step S4-37 and then terminates. The processor 25 also monitors the playback position and when it is determined at step S4-21 that the playback position has reached the start position 57 of the primary asset 43, then at step S4-23 the processor 25 enables user start time selection in the current playlist at step S4-23 because the preview secondary assets 45 have been played through in their entirety at least once. The media server 11 also updates the stored record (and/or the media server) to indicate that the preview secondary assets for the particular user and the particular selected primary asset have been viewed in their entirety. At step S4-25, the playback position will be at the primary asset start position 57 and the processor 25 begins playback of the primary asset 43.

As those skilled in the art will appreciate, if there are no preview secondary assets in the current playlist 41, then the processing will skip to step S4-21 where the processor 25 will determine that the start position 57 of the primary asset 43 has been reached.

During playback of the primary asset 43, the processor 25 will again monitor for user input indicating that the user wishes to stop playback. If, at step S4-27, the processor 25 determines that the user has stopped playback, then at step S4-29, the processor 25 stores the current playback position as a "last viewed" position in the playlist so that the user is able to select this "last viewed" position as a start time in a later playback session. Playback operation will then return to viewer to the information screen at step S4-37 and terminate. However, if at step S4-27 the user has not stopped playback, then processor 25 determines at step S4-31 if the playback position has reached the end 59 of the primary asset 43.

Once the processor 25 determines that the playback position has reached the end 59 of the primary asset 43, then the processor 25 sets the "last viewed" position to the primary asset end position 59 at step S4-33. This is to indicate to the user that the primary asset 43 has been viewed in its entirety if the user selects at a later time to resume playback from a "last viewed" position. As discussed above, this is because the user is not allowed to resume playback at an arbitrary playback position within the secondary assets 45 and 47, whether by way of user defined bookmarks or by setting of a "last viewed" position. At step S4-33, the processor 25 also begins playback of the postview secondary assets 47. At step S4-35, the processor 25 monitors for the playback position to reach the playlist end position 50 and once playback of the postview secondary assets 47 had completed, the viewer is returned to the information screen at step S4-37 and the playback operation is complete.

Figure 7 illustrates the five user selectable playback options which are available to the user via the user interface 32. The associated time fields are stored with each playlist 41 and store respective time references relative to the primary asset start position 57.

One of the options shown in Figure 7 is a preview option 53-1 which, as discussed above, can be chosen when playback of the playlist 41 is to begin at the playlist start position 49. This is the only option that is available to the user for the current playlist 41 until the user has viewed the preview secondary assets 45, if any, in their entirety at least once. Once this has happened, the user will then be provided with the further four options shown in Figure 7.

Another option shown in Figure 7 is the "user defined" playback start position 53-2 which, as discussed above, is a user defined bookmark at some playback point within the primary asset 43. In the example shown in Figure 7, the bookmark has been set at a playback position 55 minutes into the primary asset.

Another option shown in Figure 7 is the "end" start time 53-3 so that playback of the postview secondary assets 47 begins from the primary asset end position 59.

Another option shown in Figure 7 is a "start" playback start time 53-4 so that playback of the primary asset 43 will begin from the primary asset start position 57.

Finally, another option shown in Figure 7 is the "last viewed" start position 53-5 which, as discussed above, will resume playback of the primary asset 41 (or of the postview secondary assets 47 if the primary asset has been watched in its entirety) from where the user stops playback in a previous session.

In the above description, the media server 11 and the media receiver 15 are arranged to store and execute software which controls their respective operation to perform the method described with reference to Figure 4. As those skilled in the art will appreciate, a computer program for configuring a programmable device to become operable to perform the above method may be stored on a carrier and loaded into memory, such as a flash memory of the media server 11 and/or media receiver 15. The program may be downloaded as a satellite broadcast signal and applied as a patch or update to software already resident on the media server 11 and/or media receiver 15. The scope of the present invention includes the program, the carrier carrying the program and the broadcast signal.

### Alternative Embodiments

It will be understood that embodiments of the present invention are described herein by way of example only, and that various changes and modifications may be made without departing from the scope of the invention.

For example, in the embodiment described above, the media system is arranged to receive a request for a viewer selected primary asset and to generate and transmit a playlist to the viewer's media receiver. As those skilled in the art will appreciate, in an alternative system, the viewer's media receiver may already store a number of primary and secondary assets. This is typically the case in a Push VOD system for example, where the media content may have been transmitted to the media receiver without any viewer intervention. In such an alternative system, the media receiver may function to receive a viewer's selection of a primary asset and to generate a playlist from its stored media content in the same manner as described above. The playlist templates may also be stored locally on the media receiver or may be transmitted from the media server upon request. As yet a further alternative, the media receiver may be operable to transmit a request to the media server for any media content which is not stored locally and to receive and insert the media content into the playlist as discussed in the embodiment above. In this way, bandwidth consumption between the media server and media receiver can be minimised. Viewing data may also be communicated from the media receiver to the media server for a variety of purposes such as better targeting services and marketing communications.

Alternative embodiments are set out in the following clauses:
1. A media receiver for playing back received primary and secondary media content items received from a media server in response to a request for the media content, comprising:
   means for transmitting a request to the media server for a primary media content item stored on the media server;
   means for receiving a playlist including a plurality of primary and secondary media content items transmitted from a media receiver in response to requests for the media content items, wherein at least one of the secondary media content items is a preview secondary media content item provided at a playback position in the playlist before the requested primary media content item; and
   playback means for playing back the received primary and secondary media content items in the playlist, wherein the playback means is arranged so that user selection of a playback start position is disabled until playback of the selected primary media content item.
2. The media receiver of clause 1, wherein the primary media content items each comprise one of an instance of a movie, an audio and/or video programme or an audio and/or video clip.
3. The media receiver of clause 1 or 2, wherein the secondary media content items each comprise one of an advertisement clip, a promotional video clip, a trailer, or a sponsorship bumper clip.
4. The media receiver of any preceding clause, wherein the received playlist includes at least one field for storing time position data.
5. The media receiver of clause 4, wherein the received playlist includes fields for storing a user defined playback position, a last viewed playback position and an end time position.
6. The media receiver of any preceding clause, wherein the playlist includes at least one flag for indicating playback options available to a viewer during playback of the media content items in the playlist.
7. The media receiver of clause 6, wherein the playlist stores a flag indicating whether user selection of a playback start time is enabled or disabled, and wherein the flag is set to enabled once playback of the at least one preview secondary media content item has been completed in its entirety.
8. The media receiver of any preceding clause, wherein the playback means is operable to perform streaming playback of the received primary and secondary media content items in the playlist.
9. The media receiver of any preceding clause, further comprising means for storing the received primary and secondary media content items in the playlist and wherein the playback means is arranged to play back the stored media content.
10. The media receiver of any preceding clause, further comprising means for storing a listing of the media content available from the media server and wherein the media receiver is arranged to receive updates of the listing from the media server.
11. A media receiver for playing back primary and secondary media content items, comprising:
   means for receiving an indication of a selected primary media content item;
   means for generating a playlist including a plurality of primary and secondary media content items, wherein at least one of the secondary media content items is a preview secondary media content item provided at a playback position in the playlist before the selected primary media content item; and
   playback means for playing back the primary and secondary media content items in the playlist, wherein the playback means is arranged so that user selection of a playback start position is disabled until playback of the selected primary media content item.
12. A media server for providing media content in response to a request for the media content, comprising:
   means for storing a plurality of primary and secondary media content items for transmission to a media receiver in response to requests for the media content items;
   means for receiving a request for a primary media content item;
   means for generating a playlist including the requested primary media content item;
   means for adding to the playlist at least one secondary media content item associated with the primary media content item; and
   means for transmitting the primary and secondary media content items included in the playlist to the media receiver for playback.
13. The media server of clause 12, wherein the means for adding at least one secondary media content item to the playlist is arranged to add the at least one secondary media content item at a playback position in the playlist before the requested primary media content item.
14. The media server of clause 13, wherein the means for adding at least one secondary media content item to the playlist is arranged include a secondary media content item at a playback position in the playlist after the requested primary media content item.
15. The media server of any of clauses 12 to 14, wherein the primary media content items each comprise one of an instance of a movie, an audio and/or video programme or an audio and/or video clip.
16. The media server of any of clauses 12 to 15, wherein the secondary media content items each comprise one of an advertisement clip, a promotional video clip, a trailer, or a sponsorship bumper clip.
17. The media server of any of clauses 12 to 16, wherein the playlist includes at least one field for storing time position data.
18. The media server of clause 17, wherein the playlist includes fields for storing a user defined playback position, a last viewed playback position and an end time position.
19. The media server of any of clauses 12 to 18, wherein the playlist includes at least one flag for indicating playback options available to a viewer during playback of the media content items in the playlist.
20. The media server of clause 19, wherein the playlist stores a flag indicating whether user selection of a playback start time is enabled or disabled.
21. The media server of any of clauses 12 to 20, wherein the primary and secondary media content items in the playlist are transmitted to the media receiver for streaming playback.
22. The media server of any of clauses 12 to 20, wherein the primary and secondary media content items in the playlist are transmitted to the media receiver for storage in a memory of the media receiver.
23. The media server of any of clauses 12 to 22, further comprising means for updating a listing stored in the media receiver of the media content available from the media server.
24. The media server of any of clauses 12 to 23, wherein the means for adding at least one secondary media content item is arranged to dynamically select the number of secondary media content items to be included in the playlist.
25. The media server of clause 24, wherein the means for adding at least one secondary media content item is arranged to randomly select the secondary media content items to be included in the playlist.
26. A media demand and playback system comprising at least one of a media server as set out in any of clauses 12 to 25 and a media receiver as set out in any one of clauses 1 to 11.
27. A method of playing back received primary and secondary media content items received from a media server in response to a request for the media content, comprising:
   transmitting a request to the media server for a primary media content item stored on the media server;
   receiving a playlist including a plurality of primary and secondary media content items transmitted from a media receiver in response to requests for the media content items, wherein at least one of the secondary media content items is a preview secondary media content item provided at a playback position in the playlist before the requested primary media content item; and
   playing back the received primary and secondary media content items in the playlist, wherein user selection of a playback start position is disabled until playback of the selected primary media content item.
28. The method of clause 27, wherein the primary media content items each comprise one of an instance of a movie, an audio and/or video programme or an audio and/or video clip.
29. The method of clause 27 or 28, wherein the secondary media content items each comprise one of an advertisement clip, a promotional video clip, a trailer, or a sponsorship bumper clip.
30. The method of any of clauses 27 to 29, wherein the received playlist includes at least one field for storing time position data.
31. The method of clause 30, further comprising a step of storing at least one of a user defined playback position, a last viewed playback position and an end time position in a respective field in the received playlist.
32. The method of any of clauses 27to 31, further comprising a step of modifying at least one flag in the playlist for indicating playback options available to a viewer during playback of the media content items in the playlist.
33. The method of clause 32, wherein the at least one flag includes a flag indicating whether user selection of a playback start time is enabled or disabled.
34. The method of any of clauses 27 to 33, wherein streaming playback of the received primary and secondary media content items in the playlist is performed.
35. The method of any of clauses 27 to 33, further comprising a step of storing the received primary and secondary media content items and wherein the stored media content is played back.
36. The method of any of clauses 37 to 35, further comprising the steps of storing a listing of the media content available from the media server and receiving updates of the listing from the media server.
37. A method of playing back primary and secondary media content items, comprising:
   receiving an indication of a selected primary media content item;
   generating a playlist including a plurality of primary and secondary media content items, wherein at least one of the secondary media content items is a preview secondary media content item provided at a playback position in the playlist before the selected primary media content item; and
   playing back the primary and secondary media content items in the playlist, wherein user selection of a playback start position is disabled until playback of the selected primary media content item.
38. A method of selecting secondary media content for playback with an associated primary media content item, comprising:
   generating a playlist including a primary media content item;
   selecting at least one secondary media content item associated with the primary media content item in accordance with a rule of association between the primary media content item and the at least one secondary media content item; and
   adding the selected at least one secondary media content item to the playlist.
39. A method according to clause 38, wherein the rule of association specifies an association based on the content of the primary and secondary media content item.
40. A method according to clause 39, wherein the rule of association specifies an association based on the genre of the content of the primary and secondary media content item.
41. A method according to clause 39, wherein the rule of association specifies an association based on characteristics of an intended viewer of the media content items.
42. A method according to clause 39, wherein a further secondary media content item is selected in accordance with a further rule of association a plurality of secondary media content items.
43. A method according to clause 39, wherein the rule of association further specifies a specific location in the playlist relative to the primary media content item.
44. A method of providing media content in response to a request for the media content, comprising:
   storing a plurality of primary and secondary media content items for transmission to a media receiver in response to requests for the media content items;
   receiving a request from the media receiver for a primary media content item;
   generating a playlist including the requested primary media content item;
   adding to the playlist at least one secondary media content item associated with the requested primary media content item; and
   transmitting the primary and secondary media content items included in the playlist to the media receiver for playback.
45. The method of clause 44, wherein at least one secondary media content item is added to the playlist at a playback position in the playlist before the requested primary media content item.
46. The method of clause 45, wherein at least one secondary media content item is added to the playlist at a playback position in the playlist after the requested primary media content item.
47. The method of any of clauses 44 to 46, wherein the primary media content items each comprise one of an instance of a movie, an audio and/or video programme or an audio and/or video clip.
48. The method of any of clauses 44 to 47, wherein the secondary media content items each comprise one of an advertisement clip, a promotional video clip, a trailer, or a sponsorship bumper clip.
49. The method of any of clauses 44 to 48, wherein the playlist includes at least one field for storing time position data.
50. The method of clause 49, wherein the playlist includes fields for storing a user defined playback position, a last viewed playback position and an end time position.
51. The method of any of clauses 44 to 50, further comprising a step of modifying at least one flag in the playlist for indicating playback options available to a viewer during playback of the media content items in the playlist.
52. The method of clause 51, wherein the at least one flag includes a flag indicating whether user selection of a playback start time is enabled or disabled.
53. The method of any of clauses 44 to 52, wherein the primary and secondary media content items in the playlist are transmitted to the media receiver for streaming playback.
54. The method of any of clauses 44 to 53, wherein the primary and secondary media content items in the playlist are transmitted to the media receiver for storage in a memory of the media receiver.
55. The method of any of clauses 44 to 54, further comprising a step of updating a listing stored in the media receiver of the media content available from the media server.
56. The method of any of clauses 44 to 55, wherein the step of including at least one secondary media content item dynamically selects the number of secondary media content item to be included in the playlist.
57. The method of clause 56, wherein the step of including at least one secondary media content item randomly selects the secondary media content items to be included in the playlist.
58. Computer implementable instructions for configuring a programmable apparatus to become configured to perform the method of any one of clauses 27 to 57.
59. A computer storage medium storing computer implementable instructions for configuring a programmable apparatus to become configured to perform the method of any one of clauses 27 to 57.
60. A data structure stored on a computer readable medium for storing a list of primary and secondary media content items and a flag for indicating whether or not a user selectable playback start time is available to a viewer for playback of the media content items in the list.
61. A signal carrying the data structure as set out in clause 60.

## Claims

1. A method of selecting secondary media content for playback with an associated primary media content item, the method comprising, in a media server (11), the steps of:
generating a playlist including a primary media content item;
selecting at least one secondary media content item associated with the primary media content item in accordance with a rule of association between the primary media content item and the at least one secondary media content item; and
adding the selected at least one secondary media content item to the playlist.

2. The method of claim 1, wherein the primary media content items each comprise one of an instance of a movie, an audio and/or video programme or an audio and/or video clip; and
wherein the secondary media content items each comprise one of an advertisement clip, a promotional video clip, a trailer, or a sponsorship bumper clip.

3. A method according to claim 1 or 2, wherein the rule of association specifies an association based on the content of the primary and secondary media content item.

4. A method according to claim 3, wherein the rule of association specifies an association based on the genre of the content of the primary and secondary media content item.

5. A method according to claim 3, wherein the rule of association specifies an association based on characteristics of an intended viewer of the media content items.

6. A method according to any preceding claim, wherein a further secondary media content item is selected in accordance with a further rule of association a plurality of secondary media content items.

7. A method according to any preceding claim, wherein the rule of association further specifies a specific location in the playlist relative to the primary media content item.

8. A method according to any preceding claim, further comprising:
receiving a request for a primary media content item (30, 43) available from the media server; and
transmitting the generated playlist in response to the request for the primary media content item.

9. A media server (11) comprising means configured to carry out the steps of the method of any one of claims 1 to 8.

10. A method of selecting secondary media content for playback with an associated primary media content item, the method comprising, in a media receiver (15), the steps of:
generating a playlist including a primary media content item;
selecting at least one secondary media content item associated with the primary media content item in accordance with a rule of association between the primary media content item and the at least one secondary media content item; and
adding the selected at least one secondary media content item to the playlist.

11. A media receiver (15) comprising means configured to carry out the steps of the method of claim 10.

12. A computer-readable storage medium comprising instructions which, when executed by a processor, cause the processor to carry out the steps of the method of any one of claims 1 to 8 or claim 10.
